Europäisches Patentamt

European Patent Office

Office européen des brevets

(19)

(11) **EP 0 813 081 A1**

(12) **EUROPÄISCHE PATENTANMELDUNG**

(43) Veröffentlichungstag:
   **17.12.1997 Patentblatt 1997/51**

(51) Int. Cl.$^6$: **G02B 6/38**, G01B 11/27

(21) Anmeldenummer: 97109330.7

(22) Anmeldetag: **09.06.1997**

(84) Benannte Vertragsstaaten:
   **AT BE CH DE DK ES FI FR GB GR IE IT LI LU MC
   NL PT SE**

(30) Priorität: **12.06.1996 DE 19623478**

(71) Anmelder:
   **SIEMENS AKTIENGESELLSCHAFT
   80333 München (DE)**

(72) Erfinder:
   • **Ruegenberg, Gervin, Dipl.Ing
     81377 München (DE)**
   • **Zamzow, Bert, Dipl.-Ing.
     81371 München (DE)**

(54) **Verfahren zum Erkennen des Schiefstellungswinkels mindestens einer Lichtleitfaser und Einrichtung zur Durchführung des Verfahrens**

(57)   Zum Erkennen eines Winkelfehlers ($\phi$) zwischen zwei aufeinander auszurichtenden Faserenden (FE1, FE2) (z.B. in einem Spleißgerät) wird das jeweilige Faserende in mindestens einer ersten Längsposition (SH2) entlang einer vorgebbaren Meßspalte (MS2) abgetastet, dann in mindestens eine zweite Längsposition (SH3) entlang einer gewünschten Soll- Fluchtlinie (LA1) verschoben, und dort entlang derselben Meßspalte (MS2) wie bei der ersten Messung abgetastet.

FIG 1

Printed by Xerox (UK) Business Services
2.15.4/3.4

**Beschreibung**

Die Erfindung betrifft ein Verfahren zum Erkennen eines etwaigen Schiefstellungswinkels mindestens einer Lichtleitfaser gegenüber einer gewünschten Soll-Fluchtrichtung, wobei die Lichtleitfaser mit einer Abtasteinrichtung abgetastet wird.

Ein verfahren dieser Art ist aus der EP 0 400 408 A2 bekannt. Dort wird zur Erkennung eines etwaigen Winkelfehlers zwischen den Längsachsen zweier fluchtend aufeinander auszurichtender Lichtwellenleiter-Faserenden das jeweilige Faserende an zwei separaten, in Richtung seiner Längsachse gegeneinander versetzten Meßspalten quer zu seiner Längsachse mit Hilfe des Bildsensors einer Videokamera abgetastet, während das Faserende feststeht. Dieses bekannte Verfahren zur Faserschiefstellungserkennung kann in der Praxis zu ungenaue Meßwerte für den Winkelfehler liefern.

Der Erfindung liegt die Aufgabe zugrunde, einen Weg aufzuzeigen, wie eine etwaige Faserschiefstellung zweier aufeinander auszurichtender Lichtwellenleiter-Faserenden zuverlässiger erkannt werden kann. Gemäß der Erfindung wird diese Aufgabe bei einem Verfahren der eingangs genannten Art dadurch gelöst, daß in mindestens einer ersten Längsposition die jeweilige Lichtleitfaser mindestens einmal quer zu ihrer Längsachse entlang einer vorgebbaren Meßspalte abgetastet und entlang dieser Meßspalte die Intensitätsverteilung für die Abbildung der Lichtleitfaser ermittelt wird, daß die Lichtleitfaser von der ersten Längsposition in mindestens eine zweite Längsposition um einen vorgebbaren Längsversatz entlang der gewünschten Soll-Fluchtrichtung relativ zur Abtasteinrichtung derart verschoben wird, daß in dieser zweiten Längsposition die Lichtleitfaser mindestens einmal quer zu ihrer Längsachse entlang derselben Meßspalte wie in der ersten Längsposition abgetastet und entlang dieser Meßspalte die Intensitätsverteilung für die Abbildung der Lichtleitfaser ermittelt wird, und daß aus den beiden Abtastungen entlang ein und derselben Meßspalte der Schiefstellungswinkel der jeweiligen Lichtleitfaser gegenüber der gewünschten Soll-Fluchtrichtung ermittelt und zur weiteren Auswertung bereitgestellt wird.

Dadurch, daß stets entlang der gleichen, d.h. ein und derselben Meßspalte gemessen wird, bleiben die Aufnahmeverhältnisse im wesentlichen konstant, d.h. zeitinvariant. Verfälschungen bei der Winkelmessung sind somit weitgehend vermieden.

Die Erfindung betrifft weiterhin eine Einrichtung zur Durchführung des erfindungsgemäßen Verfahrens, welche dadurch gekennzeichnet ist, daß die Abtasteinrichtung eine Meßspalte aufweist, die in mindestens einer ersten Längsposition die jeweilige Lichtleitfaser mindestens einmal quer zu ihrer Längsachse abtastet und die Intensitätsverteilung für die Abbildung der Lichtleitfaser ermittelt, daß eine Verschiebeeinrichtung vorgesehen ist, welche die Lichtleitfaser von der ersten Längsposition um einen vorgebbaren Längsversatz entlang einer gewünschten Soll-Fluchtrichtung relativ zur Abtasteinrichtung derart in mindestens eine zweite Längsposition verschiebt, daß in dieser zweiten Längsposition dieselbe Meßspalte wie in der ersten Längsposition die Lichtleitfaser mindestens einmal quer zu ihrer Längsachse abtastet und die Intensitätsverteilung für die Abbildung der Lichtleitfaser ermittelt, und daß eine Auswerte- und Recheneinrichtung vorgesehen ist, welche aus den beiden Abtastungen entlang ein und derselben Meßspalte den Schiefstellungswinkel der jeweiligen Lichtleitfaser gegenüber der gewünschten Soll-Fluchtrichtung ermittelt und zur weiteren Auswertung bereitstellt.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

Figuren 1, 2      in schematischer sowie vergrößerter Darstellung jeweils eine Projektionsebene mit den Schattenbildern zweier sich einander gegenüberstehender Lichtwellenleiter-Faserenden, deren jeweilige Faserschiefstellung nach dem erfindungsgemäßen Verfahren erkannt wird,

Figur 3      teilweise in perspektivischer Darstellung schematisch den Grundaufbau einer Einrichtung zur Durchführung des erfindungsgemäßen Verfahrens,

Figur 4      eine abgewandelte Einrichtung nach Figur 3, welche dazu dient, eine Ausrichtung der Faserenden nach dem erfindungsgemäßen Verfahren gemäß den Figuren 1, 2 in zwei Ebenen durchzuführen, und

Figuren 5, 6      die Schattenbilder der beiden Faserenden gemäß den Figuren 1, 2 nach ihrem Verschweißen, wobei ein etwaiger Winkelfehler zwischen den beiden miteinander verbundenen Faserenden nach dem erfindungsgemäßen Verfahren bestimmt wird.

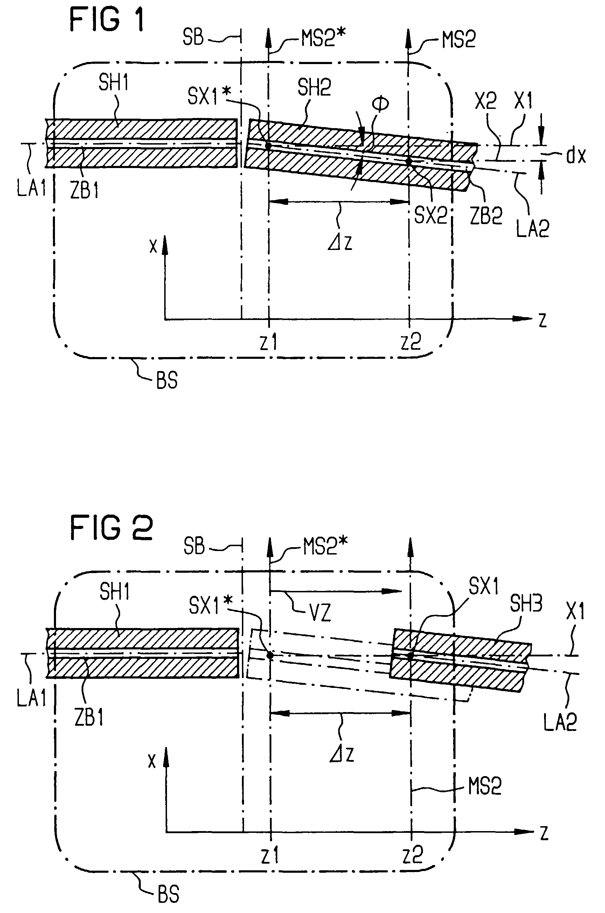

Elemente mit gleicher Funktion und Wirkungsweise sind in den Figuren 1 mit 6 jeweils mit den gleichen Bezugszeichen versehen.

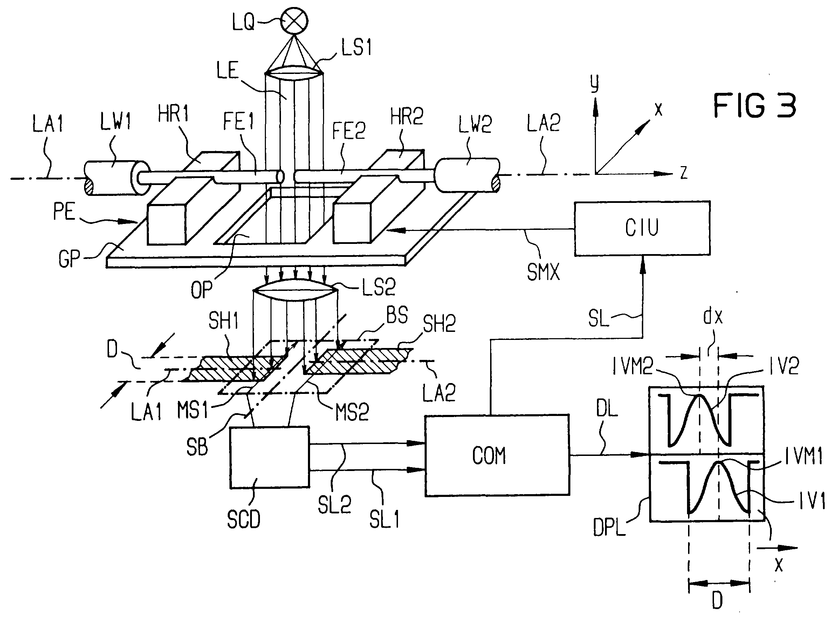

Figur 1 zeigt in schematischer sowie vergrößerter Darstellung eine Projektionsebene x/z, in der zwei Lichtwellenleiter-Faserenden beispielsweise in Form von zugehörigen Schattenbildern SH1, SH2 abgebildet sind. Die Schattenbilder SH1, SH2 können insbesondere mit Hilfe einer Meßvorrichtung gewonnen werden, wie sie in der Figur 3 dargestellt ist. Dort stehen sich ein erster sowie zweiter Lichtwellenleiter LW1, LW2 mit ihren stirnseitigen Enden gegenüber. Der jeweilige Lichtwellenleiter LW1, LW2 erstreckt sich vorzugsweise entlang einer Geradenlinie. Die beiden Lichtwellenleiter LW1, LW2 sollen beispielsweise vor ihrem Verschweißen möglichst fluchtend aufeinander ausgerichtet werden. Im Endbereich der Lichtwellenleiter ist ihre Beschichtung (Coating) entfernt, so daß ihre Faserenden FE1, FE2 blank freiliegen. Die Faserenden bzw. Lichtleitfasern FE1, FE2 sind in entsprechenden Halteeinrichtungen HR1, HR2 bekannter Bauart (wie z.B. Manipulatoren) gehalten. Diese Halteeinrichtungen HR1, HR2 sind auf einer gemeinsamen Grundplatte GP angeordnet. Dabei ist mindestens eine der Halteeinrichtungen, im vorliegenden Beispiel HR2, durch ein entsprechendes Stellglied CTU über eine Steuerleitung SMX in mindestens einer Richtung, insbesondere quer zur Faserlängsachse verschiebbar ausgebildet. Im vorliegenden Beispiel ist angenommen, daß mit einer solchen Verschiebeeinrichtung eine Bewegung in alle drei Raumrichtungen, nämlich x,y,z eines kartesischen Koordinatensystems möglich ist. Die Raumrichtung z gibt dabei eine Längsrichtung, d.h. gewünschte Soll-Fluchtlinie vor, entlang der die Faserenden FE1, FE2 fluchtend aufeinander ausgerichtet werden sollen. Die Raumrichtung x verläuft in Querrichtung zur Längserstreckung der beiden Lichtwellenleiter LW1, LW2, insbesondere senkrecht, d.h. orthogonal zur Raumrichtung z. Die plane Grundplatte GP liegt dabei insbesondere parallel zu der von der x sowie z-Raumrichtung aufgespannten Ebene. Die Raumrichtung y steht senkrecht zu dieser x,z-Ebene, d.h. sie verläuft nach oben oder unten.

Über eine Lichtquelle LQ wird mittels einer Linse LS1 ein Lichtstrahl LE im wesentlichen senkrecht zur x, z-Ebene auf die Faserenden FE1, FE2 gerichtet, wobei durch diese Faserenden FE1, FE2 eine Abschattung des Lichtstrahls LE eintritt. Die Lichtquelle LQ sendet dabei vorzugsweise weißes Licht in Richtung auf die Faserenden FE1, FE2 und beleuchtet diese. Dazu ist vorzugsweise als Lichtquelle LQ eine Halogenlampe, eine Leuchtdiode oder ein Laser vorgesehen. Auf der der Lichtquelle LQ sowie der Linse LS1 gegenüberliegenden Seite der Faserenden FE1, FE2 ist eine weitere Linse LS2 im Strahlengang des Lichtstrahls LE angeordnet, der eine im wesentlichen rechteckförmige Öffnung OP in der Grundplatte GP durchdringt. über die Linse LS2 werden die Faserenden FE1, FE2 in ihren Schatten SH1, SH2 auf eine Fläche geworfen, bzw. in einer Bildebene abgebildet, die in der x,z-Ebene liegt. In dieser Projektionsebene werden die Schatten bzw. Projektionen SH1, SH2 der Faserenden FE1, FE2 jeweils entlang einer zugeordneten Meßspalte spaltenweise abgetastet, und zwar jeweils in eine Richtung quer zu den Faserlängsachsen LA1, LA2 der Lichtwellenleiter LW1, LW2, insbesondere in x-Richtung. Dieser Abtastvorgang ist jeweils schematisch durch Pfeile MS1, MS2 angedeutet, welche jeweils parallel zur Linie SB verlaufen, die der Symmetrielinie der Gesamtanordnung in x-Richtung entspricht und die genaue Soll-Stoßstelle der Stirnflächen der Faserenden FE1, FE2 markiert.

Die spaltenweise Abtastung entsprechend den Pfeilen MS1, MS2 wird inkrementell in radialer Richtung bezogen auf die jeweilige Faserzentralachse LA1, LA2, d.h. in x-Richtung mit Hilfe einer Abtasteinrichtung SCD vorgenommen, so daß für jede Abbildung bzw. jedes Schattenbild SH1, SH2 der Faserenden FE1, FE2 eine Intensitätsverteilung in Richtung der x-Achse erhalten wird. Als Abtasteinrichtung ist vorzugsweise eine Videokamera vorgesehen, deren Bildsensor einen bestimmten Bildausschnitt BS der x,z- Projektionsebene erfaßt, der in der Figur 3 mit Hilfe einer strichpunktierten, rechteckförmigen Umrahmung gekennzeichnet ist. Innerhalb dieses Bildausschnitts BS werden die in ihn fallenden Projektionsbilder der beiden Lichtleitfasern entlang der beiden Meßspalten MS1, MS2 spaltenweise abgetastet. Die spaltenweise aufgenommenen Intensitäts- bzw. Helligkeitswerte des jeweiligen Schattenbildes SH1, bzw. SH2 werden über Leitungen SL1, SL2 von der Abtasteinrichtung SCD jeweils getrennt an eine Auswerte- und Recheneinrichtung COM übertragen und dort zu Auswertezwecken gespeichert. In dieser Auswerte- und Recheneinrichtung COM können die getrennt übertragenen Intensitätsinformationen entsprechend den Meßspalten MS1 bzw. MS2 miteinander verknüpft werden. An die Auswerte- und Recheneinrichtung COM kann gegebenenfalls auch eine Anzeigeeinrichtung DPL angeschlossen sein, die der visuellen Darstellung der entlang der jeweiligen Meßspalte MS1 bzw. MS2 gewonnenen Intensitätsverteilung dient.

Wie in der Figur 3 schematisch angedeutet, haben die beiden Intensitätsverteilungen IV1, IV2 der beiden Meßspalten MS1, MS2 in x-Richtung einen Versatz dx, welcher der Fehlpositionierung in x-Richtung entspricht und am Abschluß des Positionierungsvorgang, d.h. kurz vor dem Verschweißen der Lichtwellenleiter-Faserenden FE1, FE2 zu Null gemacht werden soll.

Die Intensitätsverteilung bei Abtastung quer zur Faserlängserstreckung wird nachfolgend beispielhaft anhand der Kurve IV1 im einzelnen erläutert. Außerhalb des Schattenbereichs SH1, d.h. außerhalb dem Durchmesserbereich D des Faserendes FE1, ist die Intensität IV1 hoch, weil sich hier das Licht von der Lichtquelle LQ völlig ungehindert ausbreiten kann. Sobald der äußere Rand des Schattenbildes SH1 erreicht wird, sinkt die Intensitätsverteilung sehr stark ab, und zwar relativ schlagartig. Über den gesamten, durch die Abschattung erfaßten Bereich D bleibt aber die Intensität IV1 nicht konstant, sondern sie erreicht vorzugsweise in der Mitte dieses Schattenbereichs ein Maximum. Dieses wird dadurch hervorgerufen, daß die blanke, d.h. saubere, entcoatete Lichtleitfaser FE1 wie eine Zylinderlinse für das sie durchdringende Licht wirkt. Gegen den anderen Rand der Schattenfläche SH1 hin tritt symmetrisch wieder ein Abfall der Intensität auf und nach dem Verlassen des Schattenbereichs bzw Schattenbilds SH1 steigt die Intensität IV1 wieder abrupt auf den ursprünglichen Helligkeitswert an. Bei einer derartigen achssymmetrischer Helligkeitsverteilung bezüglich der Längsachse des jeweiligen Faserendes entspricht also das Helligkeitsmaximum IVM1 im Bereich von D insbesondere der Mitte bzw. der Längsachse der Lichtleitfaser FE1. Somit ist es durch die Auswertung des Maximums IVM1 der Intensitätskurve IV1 in vorteilhafter Weise ermöglicht, die Lage, insbesondere der Längsachse bzw. Zentralachse, der Lichtleitfaser FE1 zu bestimmen. In gleicher Weise legt vorzugsweise das Maximum IVM2 der Intensitätskurve IV2 aus dem Schattenbereich SH2 die Lage der Längsachse der Lichtleitfaser FE2 fest. Die Verschiebung der beiden Maxima IVM1 und IVM2 der Intensitätsverteilungen IV1, IV2 gegeneinander ist somit proportional dem Versatz dx der Längsachsen LA1, LA2 der beiden Lichtwellenleiter-Faserenden FE1, FE2 in x-Richtung. Es ist also lediglich eine Verschiebung einer der Lichtleitfasern wie z.B. FE2 solange durchzuführen, bis die Verschiebung dx der Längsachsen LA1, LA2 zu Null gemacht wird, wodurch dann die Ausrichtung der Lichtleitfasern in der x,z-Ebene fluchtend ist. Diese Ausrichtung kann von einer Bedienungsperson anhand der Betrachtung der beiden Intensitätsverteilungen IV1, IV2 auf dem Anzeigegerät DPL, insbesondere einem Display erfolgen. Genauso kann es gegebenenfalls zweckmäßig sein, die Ausrichtung durch Bildung der Differenz dx in der Auswerte- und Recheneinrichtung COM automatisch durchführen zu lassen. Dazu leitet die Auswerte- und Recheneinrichtung COM ein Steuersignal ab, das über eine Steuerleitung SL an das Steuergerät bzw. Stellglied CTU weitergeleitet wird. Dieses Steuersignal veranlaßt das Steuergerät CTU, die Halteeinrichtung HR2 so in x-Richtung zu verschieben, daß der radiale Versatz der beiden Faserenden FE1, FE2 in x-Richtung verschwindet.

Besonders zweckmäßig ist es, die Intensitätsverteilungen IV1, IV2 in der Auswerte- und Recheneinrichtung COM einer Kreuzkorrelation zu unterwerfen, mit Hilfe der derjenige Längsort in x-Richtung gefunden werden kann, an dem die beiden örtlichen Intensitätsverteilungen IV1, IV2 weitgehend zur Deckung gebracht werden können, d.h. den größten Verwandtschaftsgrad aufweisen. Die Auswerte- und Recheneinrichtung erzeugt aufgrund der Kreuzkorrelation ein Stellsignal, welches über das Steuergerät CTU eine Verschiebung der Halteeinrichtung HR2 in x-Richtung solange durchführt, bis der Versatz dx zu Null gemacht ist.

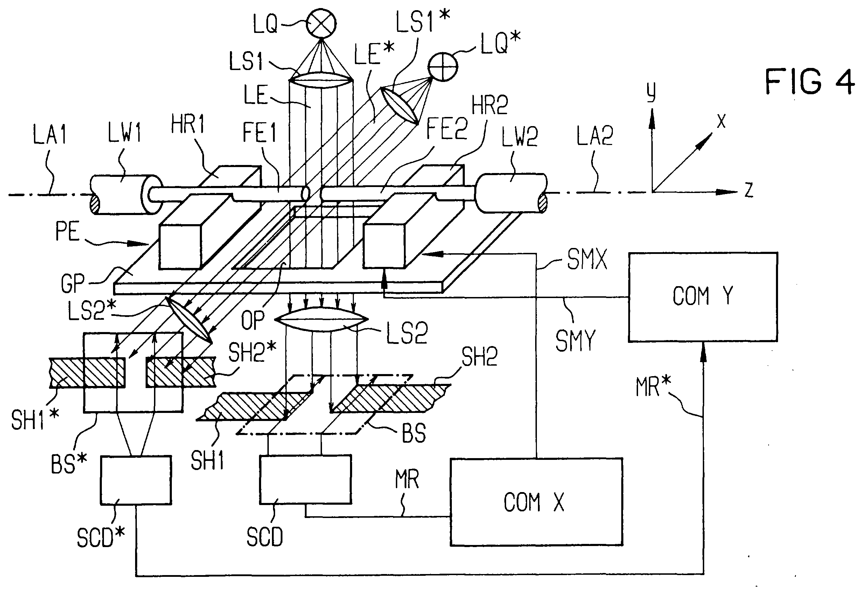

Zusätzlich oder unabhängig zur spaltenweisen Abtastung in der x,z-Ebene kann es gegebenenfalls auch zweckmäßig sein, eine Ausrichtung der Faser-Enden FE1, FE2 in der y,z-Ebene durchzuführen, d.h. in einer Ebene, die senkrecht zur x,z-Ebene steht. Wenn ein zweidimensionaler Abgleich in x sowie in y-Richtung erwünscht ist, so kann entsprechend der Ausführungsform nach Figur 4 gearbeitet werden. Dort sind, was die Lichtquellen und die Auswerteeinrichtungen anbetrifft, diese doppelt vorhanden. Die der y,x-Ebene zugeordneten Lichtquellen sowie Auswerteeinrichtungen sind jeweils zusätzlich mit einem Stern * im Bezugszeichen gekennzeichnet. Im einzelnen wird von einer Lichtquelle LQ* ein Lichtstrahl LE* mittels einer Linse LS1* in x-Richtung senkrecht zur y,z-Ebene auf die Faserenden FE1, FE2 gerichtet, so daß diese beleuchtet werden. Auf der der Lichtquelle LQ* gegenüberliegenden Seite der Fasern FE1, FE2 wird der durch die Faserende FE1, FE2 abgeschattete Lichtstrahl mit Hilfe einer weiteren Linse LS2* in einer Projektionsebene abgebildet, die in der y,z-Ebene liegt. Mit Hilfe einer der Abtasteinrichtung SCD entsprechenden Abtasteinrichtung SCD* werden in analoger Weise zur x,z-Projektionsebene Schattenbilder SH1*, SH2* für die beiden beleuchteten Faserenden FE1, FE2 erhalten. Das jeweilige Schattenbild SH1* bzw. SH2* wird jeweils vorzugsweise in y-Richtung spaltenweise entlang einer zugeordneten Meßspalte abgetastet und somit entlang dieser Meßspalte jeweils eine Intensitäts- bzw. Helligkeitsverteilung für das Faserende FE1 sowie FE2 aufgenommen. Entsprechend zu Figur 3 erfolgt die Auswertung der Signale der beiden zueinander senkrecht stehenden Ebenen in getrennten Recheneinrichtungen, die mit COMX, COMY bezeichnet sind. Über entsprechende Steuerleitungen SMX, SMY wird die Halteeinrichtung HR2 in x- bzw. y-Richtung solange verschoben, bis die fluchtende Ausrichtung der Faserenden FE1, FE2 in der x,z- sowie in der y,z-Ebene erreicht ist.

Um zu vermeiden, daß zwei Lichtquellen und zwei Abtasteinrichtung, insbesondere Videokameras erforderlich werden, kann es gegebenenfalls bereits ausreichend sein, die Grundplatte GP um 90° schwenkbar auszubilden, so daß zunächst z.B. mit der Lichtquelle LQ und der Abtasteinrichtung SCD in der in Figur 3 dargestellten Weise die Abweichung in x-Richtung bestimmt wird und nach der Ausrichtung, d.h. bei dx = 0, in dieser Richtung die Grundplatte GP samt den Lichtleitfaserenden FE1, FE2 um 90° nach oben, d.h. in die y, z- Ebene geklappt wird. Dann liegt die Positioniereinrichtung so, daß von der Lichtquelle LQ der seitliche, d.h. laterale Versatz in der y-Richtung, d.h. dy bestimmt werden kann. Anschließend erfolgt der Abgleich in dieser Richtung, so daß die y- Abweichung ebenfalls zu Null gemacht werden kann.

Auf diese Weise ist es ermöglicht, einen etwaigen radialen Versatz der beiden Faserenden FE1, FE2 in x- sowie in y-Richtung zu erkennen und durch entsprechende Ausregelung zu korrigieren. Genauso können die bestehenden Anordnungen nach den Figuren 3, 4 auch dazu genutzt werden, einen etwaigen Winkelfehler zwischen den beiden Längsachsen LA1, LA2 der beiden Faserenden bzw. Lichtleitfasern FE1, FE2 zu erkennen. Einen solchen Winkelversatz zwischen den Längsachsen LA1, LA2 der Faserenden FE1, FE2 zeigt die Figur 1 beispielhaft in der x,z-Projektionsebene schematisch in stark vergrößerter Darstellung. Die Faserenden FE1, FE2 sind dort jeweils in Form von im wesentlichen rechteckförmigen Streifen als Schattenbilder SH1, SH2 abgebildet. Da sie bei der Beleuchtungsmethode nach den Figuren 3, 4 wie Zylinderlinsen wirken, weisen sie jeweils ein Maximum der Intensität vorzugsweise in der Fasermitte, d.h. entlang ihrer Zentralachse auf. Dieser Bereich größter Helligkeit ist im Schattenbild SH1 mit ZB1 sowie im Schattenbild SH2 mit ZB2 bezeichnet. Beidseitig dieses sich entlang der jeweiligen Längsachse erstreckenden hellen Streifens, weist das jeweilige Schattenbild SH1 bzw. SH2 jeweils achssymmetrisch dazu einen Außenbereich mit geringeren Helligkeitswerten auf, der dunkler erscheint und in der Figur 1 schraffiert angedeutet ist. Auf diese Weise kennzeichnet das Maximum der Intensitätsverteilung quer zur Faserlängserstreckung vorzugsweise die Mitte, d.h. die örtliche Lage der Längsachse bzw. Zentralachse der jeweiligen Lichtleitfaser. Die Mittenachsen bzw. Längsachsen LA1, LA2 der Schattenbilder SH1, SH2 sind in der Figur 1 jeweils strichpunktiert angedeutet. Von dieser x,z-Projektionsebene wird mit Hilfe der jeweiligen Abtasteinrichtung wie z.B. SCD von Figur 3 jeweils lediglich ein Teilfeldausschnitt erfaßt. In der Figur 1 ist dieser Bildausschnitt mit Hilfe der strichpunktiert gezeichneten, rechteckförmigen Umrahmung BS gekennzeichnet. Innerhalb dieses Bildausschnittes BS erstreckt sich das Schattenbild SH1 und damit das Faserende FE1 im wesentlichen geradlinig in z-Richtung, d.h. das Faserende FE1 ist in der Figur 1 mit seiner Längsachse LA1 bereits entlang der z-Achse als gewünschte Soll- Fluchtlinie ausgerichtet und nimmt dort seine Soll-Lage ein. Demgegenüber verläuft das als rechteckförmiger Streifen ausgebildete Schattenbild SH2 des Faserendes FE2 von links nach rechts betrachtet in Form eines schräg gestellten Balkens mit negativer Geradensteigung, d.h. das Schattenbild SH2 ist bezogen auf seine Zentralachse LA2 um einen Winkel $\phi$ gegenüber seiner gewünschten Soll- Fluchtrichtung, d.h. hier insbesondere der z-Richtung, schiefgestellt.

Um diese Schiefstellung des Schattenbildes SH2 und damit des Faserendes FE2 erkennen und erfassen zu können, wird das Schattenbild SH2 mit Hilfe der Abtasteinrichtung SCD von Figur 3 in einer ersten z-Längsposition des Faserendes FE2 entlang der Meßspalte MS2 in x-Richtung abgetastet und während dieses Abtastvorgangs seine örtliche Intensitätsverteilung, d.h. sein Helligkeitsprofil aufgenommen sowie in der Auswerte- und Recheneinrichtung COM abgespeichert. Zum Beispiel durch Bestimmung des Maximums dieser Helligkeitsverteilung kann dann insbesondere die örtliche Lage der Mittenachse LA2 des Faserendes FE2 ermittelt werden. In dieser ersten Längsposition liegt das Faserende FE2 mit seiner Stirnseite beinahe Stoß an Stoß mit der Stirnseite des anderen Faserendes FE1, d.h. das Faserende FE2 ist mit seiner Stirnseite bis in die Nähe der Symmetrielinie SB geführt, die in der Figur 1 strichpunktiert miteingezeichnet ist. Es verbleibt vorzugsweise eine Lücke zwischen den beiden, sich gegenüberstehenden Stirnseiten der Faserenden FE1, FE2, um die beiden Faserenden FE1, FE2 z.B. zur Ausregelung eines etwaigen Versatzes in x- und/oder in y-Richtung noch berührungslos gegeneinander verschieben zu können. Die Meßspalte MS2 ist einem definierten Längsort Z2 in z-Richtung zugeordnet, von dem aus sie in der x,z-Projektionsebene im wesentlichen senkrecht sowie geradlinig wegläuft. Entlang dieser Meßspalte MS2 wird das Schattenbild SH2 abgescannt, dabei die örtliche Intensitätsverteilung bzw. das Intensitätsprofil des Schattenbildes SH2 aufgenommen und daraus die örtliche Lage des Helligkeitsmaximums ermittelt. Das Helligkeitsmaximum ergibt sich dabei in der Figur 1 in x-Richtung am Ort X2, d.h. vorzugsweise dort, wo die Meßspalte MS2 annäherungsweise die Mittenachse LA2 im Schnittpunkt SX2 schneidet. Dieser Ort X2 wird in der Auswerte- und Recheneinrichtung COM aus der aufgenommenen Intensitätsverteilung des Schattenbildes SH2 gewonnen, gespeichert und zur weiteren Auswertung bereitgestellt.

Gegebenenfalls kann es zweckmäßig sein, entlang der Meßspalte MS2 am z-Längsort Z2 das Schattenbild SH2 mehrfach abzutasten. Durch anschließende Mittelwertbildung der aufgenommenen Intensitätsverteilungen können in vorteilhafter Weise optische Störgrößen wie z.B. lokale Defekte, Schmutz oder Partikel auf der jeweiligen Faser oder der Abbildungsoptik, elektrische Störgrößen bei der optisch-elektrischen Umsetzung in der Abtasteinrichtung wie z.B. SCD, usw. weitgehend unterdrückt werden. Insgesamt betrachtet wird also entlang der Meßspalte MS2 mindestens eine Abtastung quer zur Längsachse der Lichtleitfaser FE2, hier insbesondere in x-Richtung, vorgenommen und entlang dieser Meßspalte der Abtast- und Recheneinrichtung COM die Intensitätsverteilung für das Schattenbild bzw. Projektions-Abbildung des Faserendes FE2 ermittelt. Die jeweilig aufgenommene Intensitätsverteilung wird in der Auswerte- und Recheneinheit COM abgespeichert und dort für weitere Auswertungen bereitgestellt.

Um eine etwaige Schiefstellung des Faserendes FE2 erkennen und/oder den zugehörigen Schiefstellungswinkel (gemessen zwischen der gewünschten Fluchtrichtung und der Faserlängsachse) bestimmen zu können, wird das Schattenbild bzw. die Abbildung des Faserendes FE2 an einer zweiten Stelle seiner Längserstreckung quer zu dieser abgetastet, die gegenüber der ersten Abtaststelle in Faserlängsrichtung um einen vorgebbaren Längsabstand versetzt ist. Dazu wird zweckmäßigerweise die Lichtleitfaser FE2 aus ihrer ersten Längsposition in eine zweite Längsposition um einen vorgebbaren Längsversatz $\Delta z$ entlang der z-Richtung längsverschoben, während die Abtasteinrichtung SCD dauerhaft feststeht. Die Stirnseite des Faserendes FE2 von Figur 1 wandert von der Soll-Stoßstelle bei der strichpunktierten Symmetrielinie SB in z-Richtung auf die Meßspalte MS2 zu, d.h. das Faserende FE2 bewegt sich insbesondere von der Stirnseite des anderen, feststehend angeordneten Faserendes FE1 weg und zwar in der Figur 1 entlang der gedachten Verlängerung der Längsachse LA1 in die rechte Bildhälfte. Die gedachte Verlängerung der Längsachse LA1 bildet also hier die gewünschte Soll- Fluchtlinie, entlang der die erste Lichtleitfaser FE1 sowie die zweite Lichtleitfaser FE2 zu liegen kommen sollen.

Alternativ bzw. umgekehrt dazu kann es gegebenenfalls auch zweckmäßig sein, die Abtasteinrichtung SCD gegenüber dem jeweiligen Faserende wie z.B.

FE2 entlang der Soll- Fluchtlinie wie z.B. LA1 parallel zu verschieben, während das Faserende FE2 selbst feststeht. In den Figuren 1, 2 wird dann der strichpunktierte Bildrand des Bildausschnitts BS in z-Richtung bewegt, während die Lichtleitfasern FE1, FE2 ortsfest angeordnet sind. Auch kann es gegebenenfalls zweckmäßig sein, das jeweilige Faserende und zugleich die Abtasteinrichtung entlang der gewünschten Fluchtlinie gegeneinander so zu verschieben, daß die jeweilig auf Schiefstellung zu überprüfende Lichtleitfaser an mindestens zwei unterschiedlichen Stellen ihrer Längserstreckung mit ein und derselben Meßspalte quer zu ihrer Längserstreckung abgetastet und ihr Intensitätsprofil entlang dieser einen, d.h. einzelnen Meßspalte aufgenommen werden kann. Das jeweilige Faserende wie z.B. FE2 wird also allgemein ausgedrückt aus seiner ersten Längsposition in mindestens eine zweite Längsposition dadurch gebracht, daß es relativ zur Abtasteinrichtung SCD von Figur 3 entlang einer Geradenlinie parallelverschoben wird, die vorzugsweise der gewünschten Fluchtlinie für die Längsachsen LA1, LA2 der beiden aufeinander auszurichtenden Faserenden FE1, FE2 entspricht. Als Fluchtlinie ist hier im Beispiel der Figuren 1, 2 die Längsachse LA1 des bereits fluchtend ausgerichteten Faserendes FE1 gewählt. Um stets mit derselben und damit lediglich mit einer einzigen Meßspalte messen zu können, genügt also bei der erfindungsgemäßen Winkelmessung lediglich eine einfache Relativbewegung zwischen der jeweilig zu prüfenden Lichtleitfaser und den übrigen Komponenten (wie z.B. Lichtquelle LQ, Grundplatte GP, Linsen LS1, LS2, Abtasteinrichtung SCD, usw.) der Abbildungseinrichtung z.B. nach Figur 3 oder 4. Neben der Verschiebung der Lichtleitfaser gegenüber den feststehend angeordneten Bauteilen der Abbildungseinrichtung ist es vorzugsweise auch möglich, nur die Abtasteinrichtung, insbesondere Videokamera mit deren Objektiv, zusammen mit der Beleuchtungseinrichtung (, die insbesondere die Lichtquelle LQ sowie die Linsen LS1, LS2 aufweist,) zu bewegen und die Lichtleitfaser fest stehen zu lassen. Bei gleichmäßiger Ausleuchtung genügt insbesondere auch das Verfahren von Kamera und Objektiv allein.

Die Figur 2 veranschaulicht beispielhaft die Längsverschiebung des Faserendes FE2 in z-Richtung (= gewünschte Fluchtrichtung für die beiden Faserenden FE1, FE2) gegenüber einer ortsfest, d.h. feststehend angeordneten Abbildungseinrichtung, insbesondere Abtasteinrichtung wie z.B. SCD von Figur 3, anhand von Schatten-Abbildungen des Faserendes FE2 für zwei verschiedene Längspositionen. Das Schattenbild SH2 ist in der Figur 2 strichpunktiert angedeutet und kennzeichnet die örtliche Lage des Faserendes FE1 in seiner ersten Längsposition gemäß Figur 1. Aus dieser ersten Längsposition heraus wird das Faserende FE2 entlang derjenigen Geradenlinie in eine zweite Längsposition parallelverschoben, die der gewünschten Fluchtlinie der Längsachsen, LA1, LA2 der beiden aufeinander auszurichtenden Faserenden FE1, FE2 entspricht. Dies ist in der Figur 2 eine Verschiebebewegung in z-Richtung von der Stoßstelle der beiden Faserenden in Richtung auf die Meßspalte MS2 zu. Sie ist mit einem Pfeil VZ gekennzeichnet. In der zweiten Längsposition ergibt sich für das Faserende FE2 durch Beleuchtung entsprechend den Figuren 3, 4 ein Schattenbild SH3, das gegenüber dem Schattenbild SH2 um einen vorgebbaren Längsversatz $\Delta z$ in z-Richtung längsverschoben ist. Der Längsversatz $\Delta z$ zwischen der ersten und der zweiten Längsposition des Faserendes FE2 wird zweckmäßigerweise derart gewählt, daß entlang ein und derselben, ortsfesten Meßspalte MS2 am selben z-Längsort Z2 sowohl das Schattenbild SH2 für die erste Längsposition des Faserendes FE2 als auch zugleich das Schattenbild SH3 für die zweite Längsposition des Faserendes FE2 jeweils mindestens einmal abgetastet werden kann. Daß das Faserende FE1 bzw. seine zugehörige Projektionsabbildung an zwei unterschiedlichen Orten seiner Längserstreckung quer zu seiner Längsachse LA2 mit ein und derselben Meßspalte MS2 am selben, d.h. ortsfesten Längsort z=Z2=konstant mindestens einmal abgescannt werden kann, wird also in der Figur 2 dadurch erreicht, daß das Faserende FE2 in z-Richtung längsverschoben wird, während die Abtasteinrichtung SCD selbst ortsfest angeordnet ist.

Die Meßspalte MS2 ist zweckmäßigerweise einem solchen z-Längsort Z2 zugeordnet, der in möglichst großem Abstand zur Symmetrielinie SB, aber noch innerhalb des von der Abtasteinrichtung erfaßten Bildausschnitts BS liegt. Die Meßspalte MS2 verläuft also vorzugsweise im Randbereich derjenigen Hälfte des rechteckförmigen Bildausschnitts BS, die dem zu überprüfenden Faserende wie z.B. FE2 zugeordnet ist. In den Figuren 1, 2 erstreckt sich die Meßspalte MS2 in x-Richtung in der rechten Randzone des erfaßbaren Bildausschnitts BS, der von der Abtasteinrichtung SCD erfaßt wird.

Zweckmäßigerweise wird das jeweilig auf Schiefstellung zu überprüfende Faserende bei üblichen Vergrößerungen des Abbildungssystems (wie z.B. entsprechend der Abbildungsoptik der US 507 84 89) vorzugsweise zwischen 0,2 und 0,5 mm in z-Richtung, d.h. entlang der gewünschten Fluchtlinie der beiden Faserlängsachsen parallelverschoben (= Längsversatz $\Delta z$). Dazu ist die Meßspalte MS2 am z-Längsort Z2 zweckmäßigerweise um einen etwas größeren Betrag, vorzugsweise zwischen 0,21 und 0,51 mm gegenüber der Symmetrielinie SB in z-Richtung längsversetzt angeordnet.

Indem entlang der Meßspalte MS2 in x-Richtung mindestens einmal, d.h. ein oder mehrere Male die Intensitätsverteilung des Schattenbildes SH3 aufgenommen und festgehalten wird, kann auch in der zweiten Längsposition des Faserendes FE2 das Helligkeitsmaximum und damit die örtliche Lage der Lichtleitfaser FE2 - vorzugsweise die örtliche Lage deren Längsachse LA2 - in x-Richtung ermittelt werden. In der Figur 2 ergibt sich insbesondere das Helligkeitsmaxima des Schattenbildes FH3 bei Abtastung entlang der Meßspalte in x- Richtung am Ort X1, d.h. dort wo die Meßspalte MS2 annäherungsweise die Mittenachse LA2 im Schnittpunkt SX1 schneidet.

Durch die Längsverschiebung des Faserendes FE2 in z- Richtung verändert die Lichtleitfaser auch ihre örtliche Lage in x-Richtung entlang der Meßspalte MS2. Während also die Lichtleitfaser FE2 entlang der gewünschten Fluchtlinie relativ zur Abtasteinrichtung längsverschoben wird, wandert ihr Schattenbild aufgrund ihrer Schiefstellung entlang der Meßspalte MS2, d.h. es kommt auch in x- Richtung zu einer Lageveränderung der Lichtleitfaser FE2. In der zweiten Längsposition der Lichtleitfaser FE2 - gekennzeichnet durch ihr Schattenbild SH3 in der Figur 2 - weist die Lichtleitfaser somit einen relativen Höhenversatz in x- Richtung gegenüber ihrer örtlichen Lage in der ersten Längsposition von Figur 1 auf. Es kommt also zu einem relativen örtlichen Höhenversatz, um den die schiefgestellte Lichtleitfaser entlang der vorgegebenen Meßspalte in ihrer Höhenlage wandert, wenn sie von ihrer ersten Längsposition in mindestens eine zweite Längsposition entlang der gewünschten Fluchtlinie längsverschoben wird. Es können somit durch Messung entlang ein- und derselben Meßspalte MS2 die x-Koordinaten X1, X2 der Längsachse LA2 an zwei unterschiedlichen Längsorten der Längserstreckung des Faserendes FE2 bereitgestellt werden. Zusammen mit der Kenntnis des Längsversatzes $\Delta z$ in z- Richtung läßt sich daraus der Schiefstellungswinkel $\phi$ nach der Beziehung $\phi$ = arctan (dx/$\Delta z$) berechnen. Die Differenz dx= X1 - X2 (vgl. Figur 1) gibt dabei denjenigen Höhenversatz an, um den die in der ersten und der zweiten Längsposition ermittelten Helligkeitsmaxima in x-Richtung relativ gegeneinander versetzt sind. Der Bruch dx/$\Delta z$ entspricht also der Steigung, mit der das Faserende FE2 gegenüber der gewünschten Fluchtlinie, hier in z-Richtung, quergestellt verläuft.

Der relative Höhenversatz dx in x-Richtung, d.h. die Differenz X1- X2, kann vorzugsweise dadurch ermittelt werden, daß die in x-Richtung aufgenommene, örtliche Intensitätsverteilung des Schattenbildes SH2 für die erste Längsposition des Faserendes FE2 mit der in x-Richtung aufgenommenen, örtlichen Intensitätsverteilung des Schattenbildes SH3 für die zweite Längsposition des Faserendes FE2 auf größtmöglichen Verwandtschaftsgrad hin verglichen, insbesondere kreuzkorreliert wird.

Der ermittelte Faserschiefstellungswinkel $\phi$ kann dann insbesondere dazu benutzt werden, den Winkelversatz für das Faserende FE2 auszuregeln. Dazu kann beispielsweise die Auswerte- und Recheneinrichtung COM von Figur 3 ein entsprechendes Steuersignal über die Steuerleitung SL an das Steuergerät CTU übermitteln, das die Halteeinrichtung HR2 für das Faserende FE2 in der x,z-Ebene gegenläufig zum Schiefstellungswinkel bzw. Winkelfehler $\phi$ entsprechend verdreht. Ist eine Ausregelung des Winkelversatzes nicht vorgesehen, so kann es trotzdem zweckmäßig sein, den Winkelfehler zu erkennen, um ihn bei der Dämpfungsberechnung zweier aufeinander auszurichtender und miteinander zu verbindender Lichtwellenleiter zu berücksichtigen. Dies ist insbesondere bei Spleißgeräten von Bedeutung, die die Dämpfung mit der sogenannten Durchlichtmethode (LID-System = "Local Injection and Detection") bestimmen, da der Winkelfehler Einfluß auf den Referenzwert für die Dämpfungsmessung hat. Die LID-Messung erfolgt dabei insbesondere nach dem Meßprinzip und der Meßanordnung der DE 38 28 604 A1 (= US 507 84 89).

Das erfindungsgemäße Prinzip zur Erkennung und Ermittlung eines etwaigen Faserschiefstellungswinkels wird zweckmäßigerweise für jedes der beiden Faserenden zweier aufeinander auszurichtender Lichtwellenleiter getrennt durchgeführt. So kann es zur Erkennung eines etwaigen Winkelfehlers des anderen, ersten Faserendes FE1 von Figur 1 bzw. 2 insbesondere zweckmäßig sein, eine eigene Meßspalte analog zur Meßspalte MS2 im linken Teil des Bildausschnitts BS vorzusehen, die bezüglich der Mittenachse des Bildausschnitts BS vorzugsweise achssymmetrisch zur Meßspalte MS2 in x- Richtung verläuft. Der Meßvorgang entlang dieser Meßspalte zur Bestimmung eines etwaigen Winkelfehlers des ersten Faserendes FE1 verläuft dann analog zu der für das zweite Faserende FE2 durchgeführten Meßmethode. In entsprechender Weise ist es selbstverständlich auch möglich, den jeweiligen Faserschiefstellungswinkel der ersten sowie der zweiten Lichtleitfaser eines bereits verspleißten, insbesondere verschweißten Lichtleitfaserpaares zu erkennen und zu ermitteln.

Zweckmäßig kann es auch sein, einen etwaigen Winkelfehler der ersten Lichtleitfaser FE1 auch mit der gleichen Meßspalte MS2 wie bei der Bestimmung des Schiefstellungswinkels der zweiten Lichtleitfaser FE2 zu ermitteln. Dazu wird die Lichtleitfaser FE2 von Figur 2 beispielsweise in positiver z- Richtung, hier in Figur 2 nach rechts aus dem Bildausschnitt BS herausgefahren und die zu messende Lichtleitfaser FE1 von der ihr zugeordneten linken Bildhälfte in die rechte Bildhälfte in z-Richtung verschoben. Der Meßvorgang erfolgt dann so, daß das erste Faserende FE1 in mindestens einer ersten Längsposition mindestens einmal quer zu seiner Längsachse entlang der vorgegebenen Meßspalte MS2 abgetastet und die Intensitätsverteilung für die Abbildung des Faserendes FE1 entlang dieser Meßspalte ermittelt wird. Das Faserende FE1 wird danach in mindestens eine zweite Längsposition um einen vorgebbaren Längsversatz entlang der gewünschten Soll-Fluchtlinie relativ zur Abtasteinrichtung derart parallel verschoben, daß in dieser zweiten Längsposition das Faserende FE1 mindestens einmal quer zu seiner Längsachse entlang ein und derselben Meßspalte MS2 abgetastet und die Intensitätsverteilung für die Abbildung des Faserendes FE1 ermittelt wird. Aus dem etwaig resultierenden, relativen Verschiebeweg des Faserendes FE1 entlang der Meßspalte MS2 bei der Längsverschiebung des Faserendes in z- Richtung um eine vorgebbare z-Distanz, kann dann der Schiefstellungswinkel der Faser FE1 berechnet werden, d.h. der Winkel, den eine etwaig schiefgestellte Faser FE1 zwischen ihrer Längsachse LA1 und der gewünschten Fluchtrichtung, hier die z- Richtung, einschließt. Der Knickwinkel bzw. Winkelfehler zwischen den beiden Faserlängsachsen ergibt sich dann aus der Differenz: 180° minus der Summe der individuellen Faserschiefstellungswinkel der beiden Faserenden (jeweils zwischen Faserlängsachse und Fluchtlinie gemessen). Da für beide, aufeinander auszurichtende Lichtleitfasern mit ein und derselben Meßspalte abgetastet wird, ergeben sich somit selbst bei der Ermittlung der Intensitätsverteilunen beider Lichtleitfasern weitgehend konstante, zeitinvariante Aufnahmeverhältnisse.

Bei zwei Gruppen von mehreren, d.h. mindestens zwei Lichtwellenleitern, die sich einander unverbunden gegenüberstehen oder schon bereits miteinander verspleißt sind, lassen sich die individuellen Schiefstellungswinkel der Lichtwellenleiter in der jeweiligen Gruppe vorzugsweise in analoger Weise zur Einzelfasermeßtechnik dadurch erkennen und ermitteln, daß jeweils der ganzen Gruppe eine einzige Meßspalte zugeordnet wird. Die Lichtwellenleiter der jeweiligen Gruppe werden in mindestens einer ersten Längsposition der Gruppe mindestens einmal quer zu ihrer Längsachse entlang dieser vorgegebenen, zugeordneten Meßspalte gemeinsam abgetastet und entlang dieser Meßspalte die individuelle Intensitätsverteilung für die Abbildung jedes Lichtwellenleiters der Gruppe ermittelt. Dann wird die Gruppe von Lichtwellenleitern von dieser ersten Längsposition in mindestens eine zweite Längsposition um einen vorgebbaren Längsversatz entlang einer gewünschten Soll-Fluchtrichtung relativ zur Abtasteinrichtung derart verschoben, daß in dieser zweiten Längsposition die Lichtwellenleiter der Gruppe mindestens einmal quer zu ihrer Längserstreckung entlang derselben Meßspalte wie in der ersten Längsposition abgetastet und die zugehörigen, individuellen zugehörigen Intensitätsverteilungen der Lichtwellenleiter der Gruppe ermittelt werden. Die Meßspalte erfaßt also gleichzeitig alle zu messenden Lichtwellenleiter der jeweiligen Gruppe quer zu deren Längserstreckung. Aus den Abtastungen entlang ein und derselben Meßspalte in den mindestens zwei Längspositionen der Gruppe lassen sich dann die Schiefstellungswinekl der Lichtwellenleiter der Gruppe individuell erkennen und ermitteln.

Gemäß den Figuren 1, 2 wird das Faserende FE2 in einem ersten Meßschritt zunächst in eine erste Längsposition gebracht, die nahe bei der Symmetrielinie SB, d.h. nahe bei der Soll-Stoßstelle liegt und dann erst in einem zweiten Meßschritt in eine zweite Längsposition verfahren, die gegenüber der ersten Längsposition weiter von der Symmetrielinie SB entfernt ist. Demgegenüber kann es besonders zweckmäßig sein, das erfindungsgemäße Meßverfahren in umgekehrter Reihenfolge durchzuführen, d.h. also: das jeweilige Faserende, wie z.B. FE2 wird zur Abtastung entlang der Meßspalte MS2 in eine erste Längsposition gebracht, die weiter als die zweite, nachfolgend anzufahrende Längsposition von der Soll-Stoßstelle weg liegt. Eine solche Vorgehensweise hat insbesondere den Vorteil, daß ein etwaiger Winkelfehler bereits beim erstmaligen Zusammenfahren der beiden Faserenden aufeinander (z.B. bereits während des Einlegevorgangs in ein Spleißgerät) ermittelt werden kann.

Gegebenenfalls kann es auch zweckmäßig sein, das jeweilige Faserende in eine weitere, wie z.B. dritte Längsposition entlang der gewünschten Fluchtlinie gegenüber der ersten Längsposition zu verschieben und den Abscannvorgang entsprechend bei der ersten oder zweiten Längsposition zu wiederholen. In der dritten Längsposition wird also wiederum entlang derselben Meßspalte quer zur Längserstreckung der Lichtleitfaser wie z.B. FE2 die örtliche Intensitätsverteilung deren Abbildung aufgenommen. Durch Vergleich der örtlichen Intensitätsverteilung für die dritte Längsposition mit der örtlichen Intensitätsverteilung für eine andere, wie z.B. die erste, Längsposition kann dann der zugehörige (Höhen-)Versatz entlang der Meßspalte bestimmt werden und zusammen mit dem bekannten Längsverschiebeweg entlang der Fluchtlinie zwischen der ersten und der dritte Meßposition der Faserschiefstellungswinkel nochmals, d.h. erneut berechnet werden. In Verallgemeinerung kann die Lichtleitfaser noch an weitere Längspositionen entlang der vorgegeben Fluchtlinie verschoben, jeweils der zugehörige, sich einstellende Versatz entlang der Meßspalte gemessen und daraus der zugehörige Schiefstellungswinkel bestimmt werden. Durch Mittelung dieser mehrfach bestimmten Faserschiefstellungs- Winkel lassen sich Meßungenauigkeiten in vorteilhafter Weise eliminieren. Allgemein ausgedrückt kann es also zweckmäßig sein, die jeweilig zu messende Lichtleitfaser relativ gegenüber der Abtasteinrichtung zu mehr als zwei Längspositionen zu verfahren und dort jeweils mit ein und derselben Meßspalte die Intensitätsverteilung des zugehörigen Schattenbildes aufzunehmen. Dadurch kann die örtliche Lage, vorzugsweise der Längsachse, des jeweiligen Faserendes an mehr als zwei Orten seiner Längserstreckung bestimmt werden und somit mehrfach der Winkelfehler ermittelt werden.

Insgesamt betrachtet ist die Erkennung eines etwaigen Winkelfehlers zwischen den Längsachsen zweier fluchtend aufeinander auszurichtender Lichtwellenleiter-Faserenden insbesondere dadurch ermöglicht, daß in mindestens einer ersten Längsposition mindestens eines der beiden Faserenden mindestens einmal quer zu seiner Längsachse entlang einer vorgebbaren Meßspalte abgetastet und entlang dieser Meßspalte die Intensitätsverteilung für die Abbildung des Faserendes ermittelt wird. Das jeweilige Faserende wird danach von der ersten Längsposition in mindestens eine zweite Längsposition um einen vorgebbaren Längsversatz vorzugsweise entlang der gewünschten Soll-Fluchtlinie derart parallel verschoben, daß in dieser zweiten Längsposition das Faserende mindestens einmal quer zu seiner Längsachse entlang derselben Meßspalte wie in der ersten Längsposition abgetastet und entlang dieser Meßspalte die Intensitätsverteilung für die Abbildung des Faserendes ermittelt werden kann. Aus den mindestens zwei Abtastungen entlang der gleichen, d.h. ein und derselben Meßspalte für die beiden Längspositionen des Faserendes kann dann der Schiefstellungswinkel der jeweiligen Lichtleitfaser ermittelt und zur weiteren Auswertung bereitgestellt werden. Aus der Summe der Schiefstellungswinkel der Lichtleitfasern läßt sich dann auch der Knickwinkel zwischen den beiden Faserlängsachsen berechnen, indem diese Summe von 180° subtrahiert wird.

Dadurch, daß an mindestens zwei verschiedenen Längsstellen des jeweiligen Faserendes mit ein und derselben Meßspalte abgetastet wird, ergeben sich in vorteilhafter Weise weitgehend konstante, zeitinvariante Meßbedingungen bzw. Aufnahmeverhältnisse beim Abscannen entlang der vorgegebenen Meßspalte. Verfälschungen bei der Winkelmessung für die jeweilige Lichtleitfaser sind somit weitgehend vermieden. Da die Intensitätsverteilungen für die Abbildungen des jeweiligen Faserendes lediglich mit einer einzigen Meßspalte der Abtasteinrichtung aufgenommen werden, fallen insbesondere ortsabhängige Schwankungen, wie zum Beispiel je nach Meßort variierende Verzeichnungsfehler, je nach Meßort variierende Beleuchtungsverhältnisse, aus der Messung weitgehend heraus. Selbst bei Vorliegen von Störgrößen entlang dieser einen Meßspalte, können somit allenfalls dieselben Störgrößen in jede der Messungen eingehen. Da insbesondere lediglich eine Relativmessung bei der Ermittlung des Höhenversatzes durchgeführt wird, der sich für das Faserabbild entlang der Meßspalte bei der Verschiebung der jeweiligen Faser entlang der gewünschten Fluchtrichtung relativ zur Abtasteinrichtung einstellt, bleibt die Winkelmessung davon im wesentlichen unbeeinflußt. Störgrößen, die von Messung zu Messung variieren bzw. schwanken, können somit weit weniger oder gar nicht das Meßergebnis für den Schiefstellungswinkel beeinträchtigen, so daß eine Art Meß-Homogenisierung bewirkt wird.

Da stets entlang der selben, vorgegebenen Meßspalte der Abtasteinrichtung gemessen wird, kann es für die Erfassung des jeweiligen Faser-Schiefstellungswinkels gegebenenfalls bereits ausreichend sein, als Abtasteinrichtung lediglich eine Meßzeile wie z.B. eine CCD- Zeile vorzusehen. Ein ganzes Meßfeld, das - wie z.B. bei einer Videokamera - einen großflächigen Bildausschnitt erfaßt, ist nicht erforderlich.

In der Praxis läßt sich mit diesem Winkel-Meßverfahren insbesondere eine Meßgenauigkeit (=Ortsauflösung in x- Richtung) deutlich besser als 500 nm erreichen. Bei einem Verschiebeweg $\Delta z$ von etwa 0,5 mm ergibt sich somit vorzugsweise eine Genauigkeit besser als $\phi = \arctan°(500nm/500\mu m) \approx 0,06°$.

Insbesondere zeichnet sich das erfindungsgemäße Meßprinzip dadurch aus, daß sämtliche zur Realisierung erforderlichen Komponenten (Optiksystem, Videokamera, Verschiebeeinrichtung für Faserführungen) in vielen Spleißgeräten bereits in der erforderlichen Qualität vorhanden sind. Daher beschränkt sich der Aufwand zur Realisierung. Mit Hilfe der hochgenauen Faserschiefstellungserkennung kann insbesondere die Spleißdämpfungsbestimmung nach dem sogenannten LID-Meßprinzip wesentlich genauer und zuverlässiger durchgeführt werden als dies bisher möglich war.

Da gemäß den Figuren 1, 2 insbesondere stets mit ein und derselben, ortsfesten Meßspalte quer zur jeweiligen Faserlängsachse abgetastet wird, während die zu messende Abbildung der jeweiligen Lichtleitfaser an mindestens zwei verschiedenen Stellen der gewünschten Fluchtlinie gebracht wird, bleiben die Abtastverhältnisse während der Abtastungen im wesentlichen stabil, d.h.homogen.

Würde demgegenüber ein etwaiger Winkelfehler dadurch bestimmt werden, daß beispielsweise das jeweilige Faserende feststeht und dessen Abbildung von zwei in Richtung der Faserlängsachse gegeneinander versetzten, unterschiedlichen Meßspalten einer Videokamera abgetastet werden, so würden in der Praxis entlang diesen beiden, d.h. zweien, gleichzeitig vorgegebenen Meßspalten unterschiedliche Aufnahmebedingungen vorliegen. Denn da die beiden Meßspalten an unterschiedlichen Orten des Bildfeldes der Aufnahmeeinrichtung, insbesondere Videokamera festgelegt wären, würden sich hierbei entlang den beiden Meßspalten unterschiedliche Abbildungsverhältnisse und damit Aufnahmequalitäten ergeben, die zu einer Verfälschung der Winkelmessung führen. Insbesondere würden bei einer solchen Messung folgende Störeinflüsse mit in das Meßergebnis eingehen:

- Eine etwaige Schiefstellung der Aufnahmeeinrichtung, insbesondere Videokamera würde mitgemessen werden.

- Da Optiksysteme praktisch stets eine bestimmte Verzeichnung bzw. Verzerrung aufweisen, die in der Bildmitte am geringsten ist und zum Rand hin abnimmt, würde der tatsächliche Faserverlauf verfälscht dargestellt werden. So würde beispielsweise bei kissenförmiger Verzerrung ein Rechteck kissenförmig verzeichnet dargestellt werden. In diesem Fall würde eine eigentlich geradlinig verlaufende Faser im Projektionsbild leicht gebogen erscheinen. Würde beispielsweise in der Figur 1 am z-Längsort Z1 mit einer zusätzlichen Meßspalte MS2* (strichpunktiert angedeutet) in der Nähe der Soll-Stoßstelle das Schattenbild SH2 des Faserendes FE2 zusätzlich zur Abtastung mit der Meßspalte MS2 abgetastet werden, so wäre die aufgenommene Helligkeitsverteilung entlang der Meßspalte MS2* mit einer geringeren Verzerrung als entlang der Meßspalte MS2 am Bildrand beaufschlagt. Die jeweilige Abtastung entlang den beiden Meßspalten MS2*, MS2 an zwei unterschiedlichen Orten des Bildfeldes BS würde die jeweilige Aufnahme der Intensitätsverteilung also mit unterschiedlichen Störgrößen beaufschlagen.

- Da weiterhin die Genauigkeit der Positionsbestimmung der Fasermittenachse von der Gleichförmigkeit der Beleuchtung im von der Abtasteinrichtung erfaßten Bildausschnitt abhängt, und dort ähnlich wie bei der Optikverzerrung die Störeffekte zum Bildrand hin zunehmen, würden entlang der Meßspalte MS2 andere Beleuchtungsverhältnisse als entlang der Meßspalte MS2* vorliegen, was ebenfalls zu Verfälschungen bei der Bestimmung des Winkelfehlers führen würde.

Da hingegen beim erfindungsgemäßen Meßprinzip vorzugsweise immer nur in der gleichen Meßspalte pro Lichtleitfaser oder gar für beide aufeinander auszurichtende Lichtleitfasern eines Faserpaares abgetastet wird, sind solche Störeinflüsse bei der Erfindung weitgehend vermieden. Auch Störeinflüsse wie z.B. durch Betauung, d.h. Niederschlagsbildung auf dem Optiksystem oder der Faser, Verschmutzung des Aufnahmesystems und/oder der Faser sowie sonstige, sich allmählich zeitlich ändernde Beeinträchtigungen nehmen weit weniger oder gar nicht Einfluß auf die Meßgenauigkeit der Winkelbestimmung. Die Unterdrückung der Störeinflüsse ist insbesondere umso besser, je kleiner der erfaßte Schiefstellungswinkel ist. Denn je kleiner der Schiefstellungswinkel der jeweiligen Lichtleitfaser ist, desto kleiner ist die Verschiebung der örtlichen Lage der Lichtleitfaser entlang der Meßspalte beim Wechsel von der ersten in die zweite Längsposition und damit die Wirkung von entlang der Meßspalte etwaig auftretenden Störfaktoren wie z.B. optischen Abbildungsfehlern, insbesondere optischen Verzerrungen oder Beleuchtungsschwankungen.

Die Erläuterungen für die Figuren 1, 2 sowie 5, 6 nehmen zwar lediglich auf die x,z-Projektionsebene Bezug. Das erfindungsgemäße Verfahren läßt sich jedoch für beliebige Betrachtungsebenen und damit Projektionsrichtungen quer, insbesondere orthogonal zur jeweiligen Faserlängsachse durchführen. Insbesondere gelten die für die x,z-Ebene gemachten Überlegungen sinngemäß in gleicher Weise auch für die y,z-Projektionsebene. Die vorgegebene Meßspalte verläuft dann in y- Richtung. Zwar liefert vorzugsweise eine orthogonale Achsenanordnung, bei der insbesondere die x- Achse senkrecht zur y-Achse steht, in der Praxis die größtmögliche Auflösung und den kleinstmöglichen Meßfehler (gegenüber anderen Achsenanordnungen). Dennoch kann es anstelle dessen gegebenenfalls auch günstig sein, einen von 90° verschiedenen Winkel zwischen der x- und der y- Achse zu wählen, um zum Beispiel bei Platzproblemen einen günstigen mechanischen Aufbau der Meßanordnung sicherstellen zu können. Insbesondere kann es vorteilhaft sein, zwischen der x- und y- Achse einen Winkel von etwa 60° zu bilden.

Weiterhin gehen die Erläuterungen zu den Figuren 1 mit 6 jeweils vereinfachend davon aus, daß das Intensitätsmaximum stets etwa in der Fasermitte liegt. Dies ist jedoch lediglich bei entsprechend genauer Ausrichtung von Beleuchtung (wie z.B. Lichtquelle, Linsen, usw.), der Lichtleitfasern, der Abbildungsoptik und folglich des Bildes (auf dem Kamerachip) in einer Achse gewährleistet. In der Praxis kann deshalb z.B. durch Toleranzen in der Positionierung der Beleuchtungsmittel, Lichtleitfasern, Abbildungsmittel, Abtasteinrichtung, usw. das Intensitätsmaximum gegebenenfalls nicht mehr exakt in der Fasermitte liegen. Dies hat jedoch im wesentlichen keinen Einfluß auf die Winkelmessung, da bei der erfindungsgemäßen Meßmethode insbesondere lediglich eine Relativmessung durchgeführt wird. Es wird dabei lediglich die örtlich Lage der jeweilig zu messenden Lichtleitfaser in der ersten Längsposition relativ zu ihrer örtlichen Lage in ihrer zweiten Längsposition ermittelt, d.h. es wird die örtliche Verschiebung und damit der relative Versatz der Lichtleitfaser entlang der vorgegebenen, einzelnen Meßspalte beim Wechsel von ihrer ersten Längsposition entlang der gewünschten Fluchtlinie in ihre zweite Längsposition bestimmt. Es ist deshalb für das erfindungsgemäße Meßprinzip weitgehend unerheblich, ob die jeweilige Fasermitte, ein oder beide Faserränder, und/oder das Intensitätsmaximum der Helligkeitsverteilung zur Lagebestimmung herangezogen werden/ wird. Die Relativverschiebung der örtlichen Lage der jeweiligen Lichtleitfaser entlang der Meßspalte, die aufgrund eines etwaigen Winkelfehlers beim Parallelverschieben der zu untersuchenden Lichtleitfaser relativ zur Abtasteinrichtung entlang der gewünschten Fluchtlinie resultiert, kann deshalb insbesondere durch Kreuzkorrelation der beiden Helligkeitsverläufe entlang der Meßspalte für die erste sowie die zweite Längsposition gewonnen werden. Denn die Kreuzkorrelation liefert von vornherein nur eine Relativaussage. Es ist deshalb nicht erforderlich, die absolute örtliche Lage der jeweiligen Lichtleitfaser (in Richtung der Meßspalte betrachtet) für die beiden Meßpositionen zu ermitteln.

Bei der erfindungsgemäßen Winkelbestimmung kann das jeweilige Intensitätsprofil der auf Schiefstellung zu überprüfenden Lichtleitfaser entlang der vorgegebenen Meßspalte gegebenenfalls auch mit Aufnahmesystemen erfaßt werden, die gegenüber denen der Figuren 3, 4 modifiziert sind. So kann es beispielsweise bereits ausreichend sein, die Abtasteinrichtung, insbesondere Videokamera, direkt auf die zu messende Lichtleitfaser selbst zu richten und nicht auf deren Schattenbild. Das von der Lichtleitfaser reflektierte Licht wird dann als Abbildung der Lichtleitfaser unmittelbar von der Abtasteinrichtung entlang einer vorgebbaren Meßspalte quer zur Faserlängsachse aufgenommen. Bei ausreichender Tageshelligkeit kann dabei unter Umständen sogar die Beleuchtung mit der Lichtquelle LQ weggelassen oder die Lichtquelle ausgeschaltet werden. Dabei kann es gegebenenfalls auch bereits genügen, lediglich den noch beschichteten, nicht entcoateten Lichtwellenleiter bzw. Lichtwellenleiter-Teilabschnitt mit der Abtasteinrichtung, insbesondere Videokamera, aufzunehmen und in diesem Aufnahmebild die örtliche Lage des Lichtwellenleiters festzuhalten.

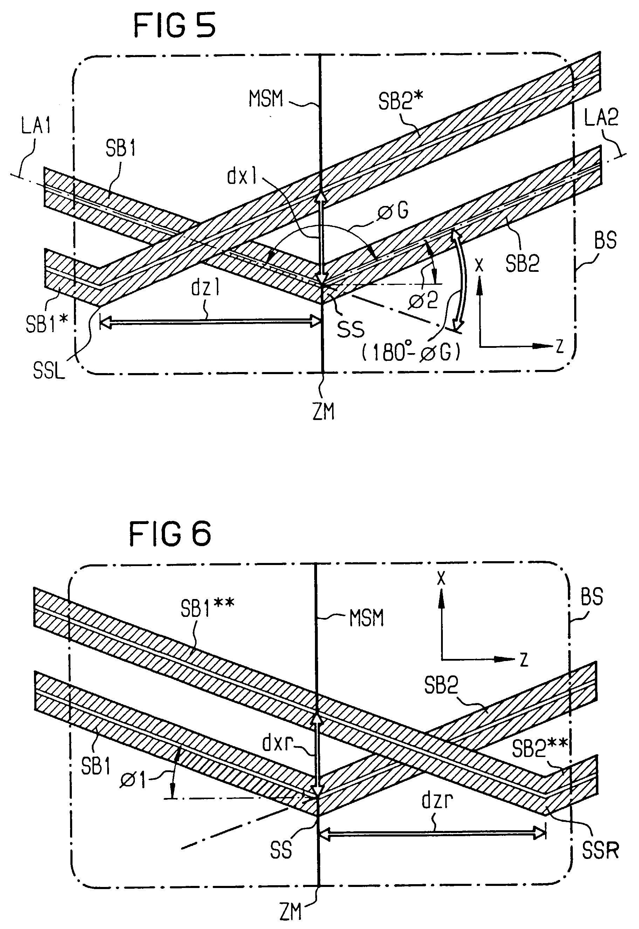

Mit Hilfe der erfindungsgemäßen Meßmethode kann nicht nur der individuelle Schiefstellungswinkel der jeweiligen, unverspleißten Lichtleitfaser (gemessen zwischen der jeweiligen Faserlängsachse und der Soll-Fluchtrichtung) vor ihrem Verspleißen mit einer anderen, zugeordneten, noch unverspleißten Lichtleitfaser ermittelt werden, sondern auch der Knickwinkel zwischen den Längsachsen zweier bereits miteinander verspleißter Lichtleitfasern. Die Figuren 5, 6 veranschaulichen, wie beispielhaft in der x,z-Projektionsebene der Knickwinkel $\phi G$ zwischen den Längsachsen der beiden Lichtleitfasern FE1, FE2 von Figur 1 bzw. 2 nach ihrem Verspleißen bestimmt werden kann. In den Figuren 5, 6 sind jetzt sowohl das Schattenbild SB1 der Lichtleitfaser FE1 als auch das Schattenbild SB2 der Lichtleitfaser FE2 und damit die beiden Lichtleitfasern FE1, FE2 selbst jeweils um einen zugehörigen, spezifischen Winkel $\phi 1$, $\phi 2$ zwischen ihrer jeweiligen Längsachse LA1, LA2 und der z-Richtung, d.h. allgemein ausgedrückt der gewünschten Soll-Fluchtrichtung schiefgestellt. Da jetzt die beiden Faserenden FE1, FE2 in der Anordnung von Figur 3 bzw. 4 mit Hilfe einer dort der Übersichtlichkeit halber nicht eingezeichneten Schweißeinrichtung, insbesondere Elektroden, an ihren Stirnseiten miteinander verschweißt worden sind, sind die beiden Schattenbilder SB1, SB2 der Figuren 5, 6 dort an der Spleißstelle miteinander durchgängig verbunden, d. h. es ergibt sich insgesamt ein einziges, zusammenhängendes Schattenbild SB1 plus SB2 für die beiden miteinander verspleißten Faserenden FE1, FE2. Das Schattenbild der Spleißstelle ist in den Figuren 5, 6 jeweils mit SS bezeichnet. Die beiden miteinander verspleißten Faserenden FE1, FE2 werden in der Positionieranordnung von Figur 3 bzw 4 zweckmäßigerweise derart in z-Richtung, d.h. allgemein betrachtet in die gewünschte Fluchtrichtung verfahren und in eine erste Längsposition gebracht, daß das Schattenbild SS ihrer Spleißstelle etwa auf der Mittenlinie bezüglich des sich in z-Richtung erstreckenden Bildrands des rechteckförmigen Bildausschnitts BS zu liegen kommt. Besonders zweckmäßig kann es sein, die beiden miteinander verspleißten Faserenden FE1, FE2 in einer ersten Längsposition bezüglich der gewünschten Fluchtrichtung so anzuordnen, daß das Schattenbild SS ihrer Spleißstelle annäherungsweise im Zentrum des von der Abtasteinrichtung SZD erfaßten, rechteckförmigen Bildausschnitts BS erscheint. Auf diese Weise ist bei der Bestimmung des der jeweiligen Lichtleitfaser FE1 bzw. FE2 spezifisch zugeordneten Schiefstellungswinkels $\phi 1$ bzw. $\phi 2$ jeweils ein ausreichend großer Verschiebeweg für die Lichtleitfaser FE1 in positiver sowie für die Lichtleitfaser FE2 in negativer z-Richtung zur Verfügung gestellt.

In den Figuren 5, 6 wird jeweils mit einer einzigen Meßspalte MSM gemessen, die etwa entlang der Mittenlinie des rechteckförmigen Bildausschnitts BS in x-Richtung verläuft. Auf diese Weise quert die Meßspalte MSM den Schattenbereich SS der Spleißstelle am z-Längsort ZM. An dieser ersten Längsposition ZM der miteinander verschweißten Lichtleitfasern FE1, FE2 wird der Schattenbereich SS deren Spleißstelle mindestens einmal entlang der vorgegebenen Meßspalte MSM abgetastet und entlang dieser Meßspalte MSM die örtliche Intensitätsverteilung für die Abbildung des Spleißbereiches ermittelt. Die derart gewonnene Intensitätsverteilung wird zu Auswertezwecken in der Auswerte- und Recheneinrichtung COM von Figur 3 bzw. 4 gespeichert und bereitgehalten.

Um nun den Schiefstellungswinkel $\phi 2$ der Lichtleitfaser FE2 ermitteln zu können, werden die beiden zusammenhängenden Faserenden FE1, FE2 ausgehend von der ersten Längsposition ZM ihres Schattenbereichs SS gemeinsam in negativer z-Richtung, d.h. in der Figur 5 in die linke Bildhälfte, um eine bestimmte Distanz dzl verschoben. Dieser Verschiebeweg bzw. Längsversatz dzl in negativer z-Richtung, d. h. entlang der gewünschten Fluchtrichtung, wird zweckmäßigerweise möglichst groß gewählt unter Einhaltung der vorgegebenen Randgrenzen des Bildausschnitts BS. In der Figur 5 ist der besseren Veranschaulichung halber das Schattenbild für das verspleißte Faserpaar FE1, FE2 zusätzlich mit eingezeichnet und mit den Bezugszeichen SB1* für die Lichtleitfaser FE1 sowie SB2* für die Lichtleitfaser FE2 versehen. Der Schattenbereich der Spleißstelle liegt jetzt in der Nähe des linken Randes des Bildausschnitts BS. Er ist dort in dieser neuen, zweiten Längsposition mit SSL bezeichnet. Die Verschiebebewegung zur Bestimmung des Faserschiefstellungswinkels $\phi 2$ für die zweite Lichtleitfaser FE2 erfolgt also in z-Richtung in denjenigen Bereich, der vorher der ersten Lichtleitfaser FE1 in der ersten Längspositon zugeordnet war, d. h. in denjenigen Bereich des Bildausschnitts BS, der der zu prüfenden Lichtleitfaser FE2 bezüglich der Spleißstelle in der ersten Längsposition ZM gegenüber liegt. Während das Faserpaar aus seiner ersten Längsposition in negativer z-Richtung als gedachte Flucht- bzw. Ausrichtrichtung in seine zweite Längsposition gebracht wird, wandert das Schattenbild der gegenüber der z-Richtung schiefgestellten Lichtleitfaser FE2 zugleich auch in x-Richtung. Es rückt ein neuer Teilabschnitt des streifenförmigen Schattenbildes der zweiten Lichtleitfaser FE2 in unmittelbare Nähe der Meßspalte MSM. Die Abbildung der Lichtleitfaser FE2 kann somit an einer zweiten Stelle deren Längserstreckung mit Hilfe ein und derselben Meßspalte MSM quer zur Faserlängserstreckung mindestens einmal abgetastet werden, und dabei jeweils die örtliche Intensitätsverteilung aufgenommen sowie registriert werden. Aufgrund der Parallelverschiebung des Faserpaares entlang der gewünschten Fluchtrichtung relativ zur Abtasteinrichtung und damit relativ zum erfaßten Bildausschnitt BS resultiert auch in x-Richtung entlang der Meßspalte MSM eine örtliche Lageveränderung der Lichtleitfaser FE2. In der Figur 5 ist dies dadurch veranschaulicht, daß das Schattenbild SB2* der Lichtleitfaser FE2 in der zweiten z-Längsposition relativ gegenüber dem Schattenbild SB2 der Lichtleitfaser FE2 in der ersten z-Längsposition einen Höhenversatz in x-Richtung entlang der Meßspalte MSM aufweist. Der relative Höhenversatz dxl zwischen der örtlichen Lage des Schattenbilds SB2* sowie der örtlichen Lage des Schattenbilds SB2 läßt sich vorzugsweise durch Auswertung der zugehörigen örtlichen Intensitätsverteilungen entlang der Meßspalte MSM für das Schattenbild SB2 sowie das Schattenbild SB2* gewinnen. Besonders vorteilhaft läßt sich der Höhenversatz dxl durch Kreuzkorrelation der Helligkeitsverteilungen entlang der Meßspalte MSM für das Schattenbild SB2 sowie das Schattenbild SB2* ermitteln. Das Verhältnis von gemessenen Höhenversatz dxl zu vorgegebenen Längsversatz dzl ergibt dann die Steigung, unter der die Lichtleitfaser FE2 schräg zur gewünschten Fluchtrichtung, d.h. hier der z-Richtung verläuft. Der Schiefstellungswinkel $\phi$2 berechnet sich insbesondere nach der Beziehung

$$\phi2 = arctan(dxl/dzl)$$

Durch entsprechende Vorgehensweise läßt sich auch der Schiefstellungswinkel $\phi$1 der Lichtleitfaser FE1 erkennen und bestimmen. Dazu wird jetzt das verspleißte Faserpaar FE1 + FE2 ausgehend von seiner ersten Längsposition, bei der der Schattenbereich SS seiner Spleißstelle der Längsposition ZM zugeordnet ist, in positive z-Richtung um einen vorgebbaren Längsverschiebeweg dzr in eine neue, zweite Längsposition verschoben. Um dies besser veranschaulichen zu können, ist in der Figur 6 ebenfalls das Schattenbild dieses längsverschobenen Faserpaares zusätzlich mit eingezeichnet. Das Schattenbild der Lichtleitfaser FE1 ist dabei mit SB1** sowie das Schattenbild der Lichtleitfaser FE2 mit SB2** bezeichnet. Der Schattenbereich der spleißstelle ist in dieser neuen, zweiten Längsposition mit dem Bezugszeichen SSR versehen. Aufgrund der Schiefstellung der Lichtleitfaser FE1 bewirkt die Parallelverschiebung um den Verschiebeweg dzr entlang der positiven z-Richtung als gewünschte Fluchtrichtung ebenfalls eine Relativverschiebung der örtlichen Lage der Lichtleitfaser FE1 in x-Richtung entlang der Meßspalte MSM. Es ergibt sich also ein Höhenversatz dxr zwischen den zeitlich nacheinander aufgenommenen Helligkeitsprofilen der Abbildung SB1 für die erste Längsposition und der Abbildung SB1** für die zweite Längsposition der Lichtleitfaser FE1. Dadurch, daß das Faserpaar in die rechte Bildhälfte des Bildausschnitts BS um den Längsversatz dzr verfahren wird, kann von ein und derselben Meßspalte MSM die Abbildung der Lichtleitfaser FE1 an einer weiteren Stelle deren Längserstreckung quer zur Faserlängsachse abgescannt werden. Der Schiefstellungswinkel $\phi$1 der Lichtleitfaser FE1 berechnet sich somit insbesondere nach der Beziehung

$$\phi1 = arctan(dxr/dzr),$$

wobei das Verhältnis dxr zu dzr die Steigung angibt, unter der die Lichtleitfaser FE1 gegenüber der gewünschten Fluchtrichtung, d.h. der z-Richtung schräg verläuft. Der Knickwinkel $\phi$G (vergleiche Figur 5) kann somit insbesondere nach der Beziehung

$$\phi G = 180° - (\phi1 + \phi2) \text{ berechnet werden.}$$

Dadurch, daß das Faserpaar in eine erste Meßposititon gebracht wird, bei der die Abbildung seines Spleißbereiches mit der Meßspalte MSM abgetastet werden kann, und dann ausgehend von dieser ersten Meßposition das Faserpaar in eine zweite Längsposition links sowie rechts, d. h. wechselseitig von der Meßspalte MSM verfahren wird und dabei jeweils wiederum entlang ein und derselben Meßspalte MSM wie in der ersten Längsposition abgetastet wird, kann der Knickwinkel $\phi$G in vorteilhafter Weise bereits lediglich mit drei Abtastungen bestimmt werden.

Selbstverständlich kann der Knickwinkel zwischen den beiden miteinander verspleißten, insbesondere verschweißten Lichtleitfasern FE1, FE2 auch dadurch ermittelt werden, daß in vorteilhafter Weise die zu den Figuren 1 mit 4 aufgeführten Meßschritte jeweils separat für jede der beiden Lichtleitfasern durchgeführt wird. Pro Lichtleitfaser werden dabei mit der spezifisch zugeordneten, selben Meßspalte zweckmäßigerweise mindestens zwei Abtastungen an mindestens zwei Stellen entlang dem Längsverlauf der jeweiligen Lichtleitfaser durchgeführt.

**Patentansprüche**

1. Verfahren zum Erkennen eines etwaigen Schiefstellungswinkels ($\phi$) mindestens einer Lichtleitfaser (z.B. FE2) gegenüber einer gewünschten Soll-Fluchtrichtung (z.B. z-Richtung), wobei die Lichtleitfaser (z.B. FE2) mit einer Abtasteinrichtung (SCD) abgetastet wird,
**dadurch gekennzeichnet**,
daß in mindestens einer ersten Längsposition (SH2) die jeweilige Lichtleitfaser (wie z.B. FE2) mindestens einmal quer zu ihrer Längsachse (LA2) entlang einer vorgebbaren Meßspalte (MS2) abgetastet und entlang dieser Meßspalte (MS2) die Intensitätsverteilung (IV2) für die Abbildung der Lichtleitfaser (SH2) ermittelt wird,
daß die Lichtleitfaser (FE2) von der ersten Längsposition (SH2) in mindestens eine zweite Längsposition (SH3) um einen vorgebbaren Längsversatz ($\Delta$z) entlang der gewünschten Soll-Fluchtrichtung (z.B.z-Richtung) relativ zur Abtasteinrichtung (SCD) derart verschoben wird,
daß in dieser zweiten Längsposition (SH3) die Lichtleitfaser (FE2) mindestens einmal quer zu ihrer Längsachse (LA2) entlang derselben Meßspalte (MS2) wie in der ersten Längsposition (SH1) abgetastet und entlang dieser Meßspalte (MS2) die Intensitätsverteilung (IV2) für die Abbildung der Lichtleitfaser (SH2) ermittelt wird,

und daß aus den beiden Abtastungen (IV1, IV2) entlang ein und derselben Meßspalte (MS2) der Schiefstellungswinkel (φ) der jeweiligen Lichtleitfaser (z.B. FE2) gegenüber der gewünschten Soll-Fluchtrichtung ermittelt und zur weiteren Auswertung bereitgestellt wird.

2. Verfahren nach Anspruch 1,
**dadurch gekennzeichnet**,
daß die durch die beiden Abtastungen gewonnenen Intensitätsverteilungen (IV1, IV2) miteinander kreuzkorreliert werden, und daß aus dieser Kreuzkorrelation eine etwaige Lageänderung (X1-X2) der jeweiligen Lichtleitfaser (wie z.B. FE2) entlang der festgelegten Meßspalte (MS2) bei der Verschiebebewegung (VZ) von der ersten in die zweite Längsposition bestimmt wird.

3. Verfahren nach einem der vorhergehenden Ansprüche,
**dadurch gekennzeichnet**,
daß die jeweilige Lichtleitfaser (z.B. FE2) gegenüber der Abtasteinrichtung (SCD) entlang der Soll-Fluchtrichtung (z.B. z-Richtung) parallelverschoben wird, während die Abtasteinrichtung (SCD) feststeht.

4. Verfahren nach einem der Ansprüche 1 oder 2,
**dadurch gekennzeichnet**,
daß die Abtasteinrichtung (SCD) gegenüber der jeweiligen Lichtleitfaser (z.B. FE2) entlang der Soll-Fluchtrichtung (z.B. z-Richtung) parallelverschoben wird, während die Lichtleitfaser (FE2) feststeht.

5. Verfahren nach einem der vorhergehenden Ansprüche,
**dadurch gekennzeichnet**,
daß die jeweilige Lichtleitfaser (wie z.B. FE1) am äußeren Bildrand des von der Abtasteinrichtung (SCD) erfaßbaren Bildausschnitts (BS) entlang der vorgegebenen Meßspalte (MS2) abgetastet wird.

6. Verfahren nach einem der vorhergehenden Ansprüche,
**dadurch gekennzeichnet**,
daß die jeweilige Lichtleitfaser (FE1, FE2) so beleuchtet wird, daß sie sich wie eine Zylinderlinse verhält, und daß das Schattenbild (SH2) der jeweiligen Lichtleitfaser (FE1, FE2) in seiner Intensität (IV2) abgetastet und zur Auswertung herangezogen wird.

7. Verfahren nach einem der vorhergehenden Ansprüche,
**dadurch gekennzeichnet**,
daß der jeweiligen Lichtleitfaser (FE2) jeweils eine weitere, zweite Lichtleitfaser (FE1) zugeordnet wird, die fluchtend auf die erste Lichtleitfaser (FE1) ausgerichtet werden soll.

8. Verfahren nach Anspruch 7,
**dadurch gekennzeichnet**,
daß die beiden Lichtleitfasern (FE1, FE2) quer zu ihrer Längserstreckung jeweils entlang ein und derselben Meßspalte (MS2) abgetastet werden.

9. Einrichtung zur Durchführung des Verfahrens nach einem der vorhergehenden Ansprüche,
**dadurch gekennzeichnet**,
daß die Abtasteinrichtung (SCD) eine Meßspalte (MS2) aufweist, die in mindestens einer ersten Längsposition (SH1) die jeweilige Lichtleitfaser (wie z.B. FE2) mindestens einmal quer zu ihrer Längsachse (LA2) abtastet und die Intensitätsverteilung (IV2) für die Abbildung der Lichtleitfaser (SH2) ermittelt,

daß eine Verschiebeeinrichtung (HR2) vorgesehen ist, welche die Lichtleitfaser (FE2) von der ersten Längsposition (SH2) um einen vorgebbaren Längsversatz (Δz) entlang einer gewünschten Soll-Fluchtrichtung (z.B. z-Richtung) relativ zur Abtasteinrichtung (SCD) derart in mindestens eine zweite Längsposition (SH3) verschiebt,

daß in dieser zweiten Längsposition (SH3) dieselbe Meßspalte (MS2) wie in der ersten Längsposition (SH2) die Lichtleitfaser (FE2) mindestens einmal quer zu ihrer Längsachse (LA2) abtastet und die Intensitätsverteilung (IV2) für die Abbildung der Lichtleitfaser (SH2) ermittelt,

und daß eine Auswerte- und Recheneinrichtung (COM) vorgesehen ist, welche aus den beiden Abtastungen entlang ein und derselben Meßspalte (MS2) den Schiefstellungswinkel (φ) der jeweiligen Lichtleitfaser (z.B. FE2) gegenüber der gewünschten Soll-Fluchtrichtung ermittelt und zur weiteren Auswertung bereitstellt.

FIG 1

FIG 2

14

FIG 3

EP 0 813 081 A1

FIG 4

EP 0 813 081 A1

## FIG 5

## FIG 6

Europäisches
Patentamt

**EUROPÄISCHER RECHERCHENBERICHT**

Nummer der Anmeldung

EP 97 10 9330

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | EP 0 400 408 A (SIEMENS AG) 5.Dezember 1990 <br> * das ganze Dokument * <br> --- | 1,2,6,7,9 | G02B6/38 <br> G01B11/27 |
| A | RESEARCH DISCLOSURE, <br> Nr. 216, April 1982, HAVANT, HAMPSHIRE, GREAT BRITAIN, <br> Seiten 131-132, XP002037997 <br> FIBER-FUSION LTD.: <br> * Abbildung 12 * <br> --- | 1,7,9 | |
| P,A | DATABASE WPI <br> Section PQ, Week 9710 <br> Derwent Publications Ltd., London, GB; <br> Class P81, AN 97-104817 <br> XP002038167 <br> & JP 08 338 921 A (NIPPON TELEGRAPH & TELEPHONE CORP) , 24.Dezember 1996 <br> * Zusammenfassung * <br> ----- | 1,3,9 | |

| RECHERCHIERTE SACHGEBIETE (Int.Cl.6) |
|---|
| G02B <br> G01B |

Der vorliegende Recherchenbericht wurde für alle Patentansprüche erstellt

| Recherchenort | Abschlußdatum der Recherche | Prüfer |
|---|---|---|
| BERLIN | 20.August 1997 | Ciarrocca, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)